# EUROPEAN PATENT SPECIFICATION

(11) **EP 1 183 823 B1**
(45) Date of publication and mention of the grant of the patent: **12.07.2006**
(21) Application number: 00936847.3
(22) Date of filing: 31.05.2000
(51) Int. Cl.: H04L 12/28, H04L 12/66, H04L 29/06

(54) **METHOD AND DEVICE FOR CONTROLLING A HOME NETWORK FROM AN EXTERNAL COMMUNICATION NETWORK**
VERFAHREN UND VORRICHTUNG ZUR FERNBEDIENUNG EINES HAUSNETZWERKS VON EINEM EXTERNEN KOMMUNIKATIONSNETZ
PROCEDE ET DISPOSITIF POUR LE CONTROLE D'UN RESEAU DOMESTIQUE DEPUIS UN RESEAU DE COMMUNICATION EXTERNE

(30) Priority: 02.06.1999 EP 99401328
(43) Date of publication of application: 06.03.2002
(73) Proprietor: Thomson Licensing, 92100 Boulogne-Billancourt (FR)
(72) Inventor: BICHOT, Guillaume, F-92648 Boulogne Cedex (FR); FANNECHERE, Nicolas, F-92648 Boulogne Cedex (FR)
(74) Representative: Kohrs, Martin
(86) International application number: PCT/EP2000/005015
(87) International publication number: WO 2000/076130

(56) References cited:
- WO-A-98/53581
- CORCORAN P M: "MAPPING HOME-NETWORK APPLIANCES TO TCP/IP SOCKETS USING A THREE-TIERED HOME GATEWAY ARCHITECTURE" IEEE TRANSACTIONS ON CONSUMER ELECTRONICS,IEEE INC. NEW YORK,US, vol. 44, no. 3, 4 June 1998 (1998-06-04), pages 729-736, XP000921454 ISSN: 0098-3063
- KLESPER T: "DER INTERNET-ZUGRIFF AUFS LON. WELTWEITER ZUGRIFF AUF DIE SENSORIK UND AKTORIK VON AUTOMATISIERUNGS-PROJEKTEN" ELEKTRONIK,DE,FRANZIS VERLAG GMBH. MUNCHEN, vol. 47, no. 8, 14 April 1998 (1998-04-14), page 60,62,64,66 XP000780190 ISSN: 0013-5658
- CORCORAN P M ET AL: "User interface technologies for home appliances and networks" IEEE TRANSACTIONS ON CONSUMER ELECTRONICS,US,IEEE INC. NEW YORK, vol. 44, no. 3, 2 June 1998 (1998-06-02), pages 679-685, XP002138632 ISSN: 0098-3063
- CORCORAN P M ET AL: "BROWSER-STYLE INTERFACES TO A HOME AUTOMATION NETWORK" IEEE TRANSACTIONS ON CONSUMER ELECTRONICS,US,IEEE INC. NEW YORK, vol. 43, no. 4, 1 November 1997 (1997-11-01), pages 1063-1069, XP000768559 ISSN: 0098-3063

## Description

The present invention concerns the control of a home network, in particular a HAVi network, such as specified in the Home Audio/Video interoperability specification version 1.0 beta+ of October 23, 1998, from a device external to the network such as a PC connected to the Internet. The invention concerns both the control method and a device for implementing this method.

The home network architecture allows any connected device to inter-operate across a medium (an IEEE 1394 serial bus for instance) using a command language as specified by HAVi, AV/C CTS or CAL. An in-home network that has to be connected to the external word has to contain a "home network access" device. The role of this access device is to allow a communication between an in-home device, part of the home network, and an external device, not part of the home network, according to a particular protocol technology, such as the Internet network protocols.

The document 'Mapping home-network appliances to TCP/IP sockets using a three-tiered home gateway architecture' by Peter M. Corcoran, IEEE Transactions on Consumer Electronics IEEE Inc. New York, Us, Vol. 44, No. 3, June 4, 1998, pages 729-736 describes a specific gateway architecture in which the gateway maintains a dynamic state model of the real home network.

The document 'Der Internet Zugriff aufs LON' by Tilo Klesper, Elektronik 8/1998 XP-000780190 describes a device for controlling a local network from a device connected to the internet.

The object of the invention is a method for controlling devices in a home network by a control device connected to the home network by a home access device, characterized in that it comprises the steps of:
- providing, in the home access device, generic user control protocol page sets for the functional component types defined by the home network specification;
- discovering, by the home access device, of functional components modules of devices connected to the home network;
- upon selection of a functional component module using the control device, instantiating of generic user control protocol pages corresponding to said selected functional component module as a function of parameters of said selected functional component module.

The home access device (gateway) stores predefined pages for each functional component module. When a module is to be accessed by an external device such as a HTML browser, the corresponding pages are adapted to the current status parameters of the module to be controlled, for transmission to the external control device.

According to the preferred embodiment, the user control protocol is HTML or JavaScript or Java.

According to an embodiment, the home access server communicates to the control device a user control protocol page comprising information identifying at least part of discovered functional components.

Another object of the invention is a home access device for connecting a home network to a communication network comprising:
- a protocol stack for communication through the communication network with a control device for user interaction;
characterized in that it comprises
- a memory for containing predefined generic user control pages for functional component modules;
- means for determining functional component modules present in the home network, for determining parameters of said functional component modules, for updating user control pages corresponding to a selected functional component module as a function of the parameters of said selected functional component module and for transmitting the updated pages to the control device.

Other characteristics and advantages of the invention will appear through the description of a non-limiting embodiment, described in relation with the figures among which:
- figure 1 represents a display of a HTML home page for a home network;
- figure 2 represents a display of a HTML page for VCR control;
- figure 3 represents a display of a HTML page for VCR programming;
- figure 4 is a schematic diagram of the home network corresponding to figure 1;
- figure 5 is a diagram describing the communications between a HAVi network target device, a home network access server and a web browser according to the present invention.

Moreover, five HTML scripts are given at the end of the present description.

Although the embodiment described in the following pages concerns mainly a HAVi home network using IEEE 1394 serial buses as communication medium, the invention is not limited to such a specific environment. The described characteristics may be adapted to other home bus architectures (such as for example CE BUS) and other command/control paradigms such as the AV/C CTS (TA1394) or the CAL language. Some examples relating to AV/C CTS will also be given in order to enhance the description.

For further information relating to HAVi, one should refer to the latest published draft specification, i.e. HAVi 1.0 beta+, of October 23, 1998, available on the HAVi website (http://www.havi.org).

For further information concerning IEEE 1394 buses, one should refer to the IEEE 1394 - 1995 document published by the IEEE.

The following two possibilities can be taken into consideration for the implementation of the Internet Protocol ('IP') in a home network:
- The IP may be transparently carried over the home network. In that case, it shall follow the relevant IETF (Internet Engineering Task Force) specifications. At least some of the devices of the network need to carry the IP protocol stack. For IEEE 1394 serial bus systems, the relevant working group of the IETF is working on 'IPVersion 4' over IEEE 1394 (Internet draft).
- The IP may also be terminated in the home network access device. Some of the advantages of this solution are that the IP stack is not required within the home network devices and that the home network is more secure.

The invention is based on this second solution.

There is currently no support in existing audio/video home network architectures such as AV/C CTS, CAL or HAVi home networks for access of a device connected to one of these networks over the internet. For example, a user may wish to program his VCR, connected to a HAVi network at home, using a web browser on a PC in his office.

The user control paradigm within the Internet is HTML. The home access device (also called home access server) which is connected to the Internet (and thus comprises a complete IP stack), contains a HTTP server that provides the access to a set of HTML pages.

The home network according to the present embodiment is HAVi based, although any other technology specifying a command/control protocol to control home equipment such as audio/video equipment may be used.

The role of the home access server is to maintain an up-to-date view of the home network configuration. It means that the server maintains a HTML home page with references linked to each equipment present in the network. In HAVi (as well as in AV/C CTS or CAL), once a device is connected to the home network, any other device has the possibility to obtain information concerning the newly connected device.

According to the present embodiment, each device is identified by an icon, stored in the device. HAVi enables the downloading of such information from a target device.

When a new device is connected to the home network, the home page proposed by the server will be updated with a new icon representing the new target device.

Each icon is associated with at least one HTML page dedicated to this device. This HTML page is, according to the present embodiment, a predefined page that has been built in accordance with the home network architecture specification (HAVi, AV/C CTS...). This means that the possibilities - in terms of control - offered to the user through the HTML description are in conformance with the command and response messages described in the corresponding network specification. For example in AV/C CTS, the command 'PLAY', destined to a recording/reproducing device such as a VCR, can be sent with a number of arguments. The home network access server stores a pre-built HTML page for a generic AV/C CTS VCR that will enable the user to access the PLAY function and specify the necessary arguments.

For a network compliant with the HAVi - 1.0b draft specification, a HAVi "home access server" should have in memory HTML pages to provide the control of the specified functions of the device interface (status, power) and the following functional component interfaces:
TUNER,
VCR,
CLOCK,
A/V CAMERA,
A/V DISC,
WEB PROXY,
MODEM,
A/V DISPLAY,
DISPLAY/AMPLIFIER,
A/V CONVERTER

For a network compliant with the AV/C CTS - 2.01 specification, an AV/C CTS "home access server" should have in memory HTML pages to provide the control of the specified functions of the common unit (status, power) and the following subunits:
TUNER,
VCR

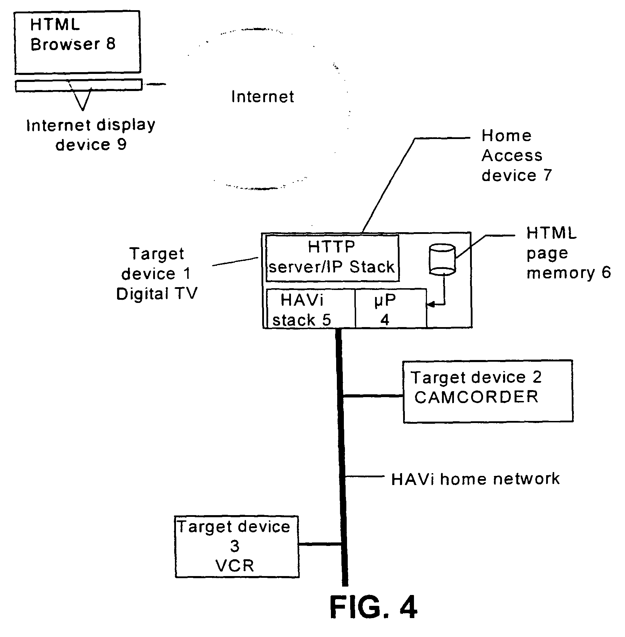

Figure 4 shows a typical home network configuration. The network of figure 4 contains a display terminal (typically a PC) connected to the Internet. The display terminal contains a WEB browser to allow the user to control home devices through the "home access device" using HTML. The level of functionalities the WEB browser has to include is out of the scope of this document. According to the present embodiment it is at least HTML compliant. It may further support such languages as Javascript or Java. The present embodiment is based only on HTML. However, the support of JavaScript or Java can be used to reinforce the possibilities to control some specific devices. In particular, it would be possible to handle asynchronous events as such the "end of tape" event generated by a VCR.

The network also comprises the home access device 1 that includes the "home access server" (a HTTP server according to the present embodiment). This home access device is also a digital TV and, therefore, includes a display component and a tuner component.

The network also comprises two other end devices as a VCR 3 and a camcorder 2.

All devices are HAVi compliant.

The "home access device" contains the Internet Protocol (IP) stack and equipment to enable connection to the Internet. Typically, "the home access device" could also be a cable set top box connected to a display, or any other device. Its IP stack would typically comprise:
- a cable modem
- IP
- TCP/UDP
- HTTP

HTTP (1.1 - RFC 2068) is a simple command/response based protocol. Two objects are involved in HTTP: the client, sending a command, and an origin server receiving the command and sending back a response. By extension, a HTTP server is called a WEB server.

The most used command is GET <URL> where the Uniform Resource Locator points to the object to be obtained, This reference comprises two parts: the first points to the server equipment and the second points to the object concerned by the command. This target object can be an existing object such as a HTML script or a bitmap or any other type of object. The object reference can also point to something that has a meaning for the WEB server but does not represent any 'real' object. This mechanism is used for instance in an HTML script to signal to a WEB server that the user just selected an icon: the HTML script associates this icon with a URL which will be sent to the WEB server (through the GET command) when the user selects/activates the icon.

A URL reference can include parameters as a command from upper layer protocols.

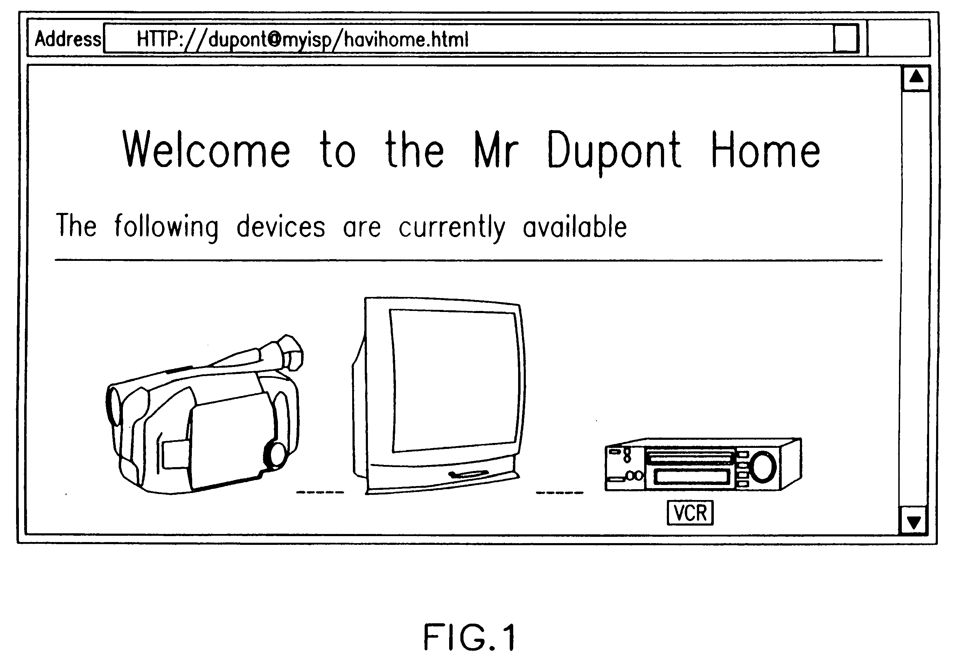

The "home access server" offers the access to the up-to-date home page. An example of such a home page is given by figure 1. This home page corresponds to the network of figure 4.

The corresponding HTML page is defined by Script 1 (see below). Each time a new device is added to the network the "home access server" updates this home page script by adding the appropriate line(s).

The line corresponding to the VCR 3 is:
"<A href="havivcr"><IMG src="tvicons/photovr911hf_sm.gif" width="150" height="44" alt="Thomson hz2 VCR"></A>
- "tvicons photovr911hf_sm.gif" is the (relative) reference to a picture (icon) representing the new device type. Internally, the "home access device" makes an association between this icon and the home network address of the device (the SEID/GUID identifiers for HAVi). This icon has previously been obtained by the "home access server" from the target VCR device itself through the appropriate HAVi mechanism. In a HAVi network, during the device discovery process, any device can obtain the names from the 1394-1995 ROM memory of the new device.
- "havivcr" is the (relative) reference that will be sent to the "home access server", when the user selects the VCR icon. It corresponds to the first HTML page allowing the control of the chosen device. This reference must be unique in this page. Thus, if a second VCR is connected to the network, the "home access server" will add a new line, for example as follows: "<A href="havivcr2"><IMG src=""tvicons/photovr911hf_sm.gif" width="150" height="44" alt="RCA YY VCR "></A>".
- "Thomson hz2 VCR" is the name of the device of the functional component. This name has been previously obtained by the "home access server" from the target device itself through HAVi or lower layer mechanism. In a HAVi network, during the discovery process, any appliance can get these names from the 1394-1995 ROM memory of the new device. It is also possible to get this information - in a HAVi network-through the registry service where all network components (device, functional components, application) are registered.

Each time a device is removed from the home network, the "home access server" updates the home page script removing the corresponding line.

According to a variant embodiment, the "home access server" offers access to a number of its own applications through the home page.

The "home access device" stores a number of predefined generic HTML page sets. According to the present embodiment, it stores one set for each type of well-specified components (for HAVi, these components will be TUNER, VCR, CAMERA, DISC,...). Script 2 shows the first HTML script of the generic set that allows the control of a VCR type component. This page is downloaded by the web browser (of the internet display device), once the user selects the icon representing this equipment (Figure 1). Of course, the VCR page set could provide the access to all specified functionalities of the HAVi VCR as described in the specification (HAVi 1.0Beta+ - chapter 6.2). However, it is up to the designer of the "home access server" to decide whether to offer the access to only a subset of these functions (offering the remote access of the "ejectmedia" capability for ejecting the tape may make no sense for a VCR in the present context), or to all functions.

The "home access server" has to handle the situation where two devices (or more) of the same type are present on the home network. Since it is the same HTML script (Script 2) which will be sent for several devices of the same type, the "home access server" needs to make the association between the HTTP commands and the different target devices. This association is made when the user select the device from the home page.

The "home access device" will identify:
- the user through the IP address of the display device he is using; and
- the target device to be controlled due to the association between the icon selected by the user and the home network address of the associated device.

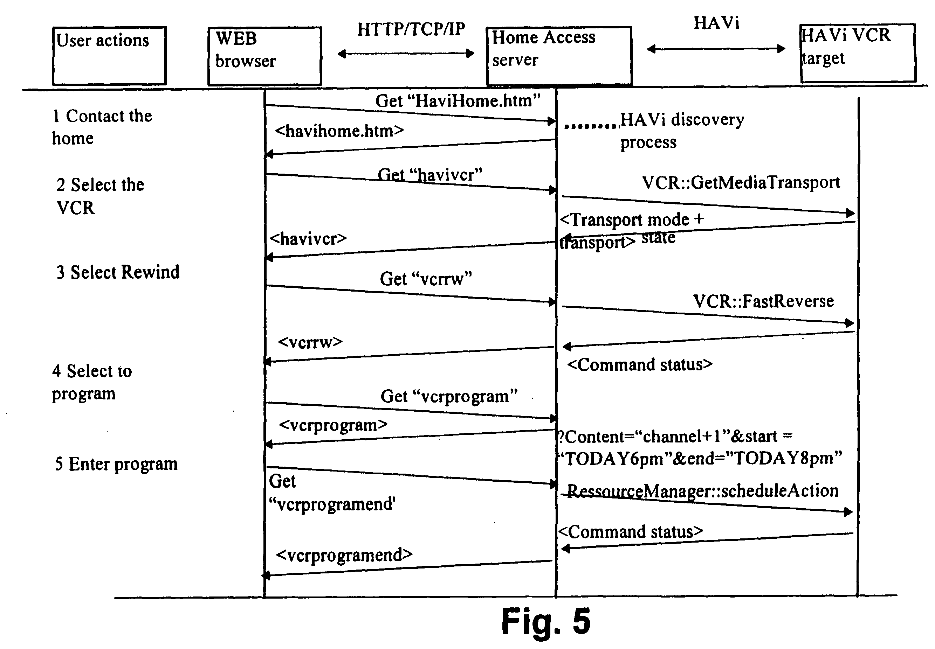

As an example, we will consider the already mentioned case of a user wanting to program his VCR from an office PC. Figure 5 details the step-by-step process that permits to track the different protocol interactions between the user agent (the WEB browser), the "Home access server" and the target device (the VCR).

First, the user has to contact his home through his WEB browser. As shown in the 'Address' field of Figure 1, the user enters his home page reference. The WEB browser then sends a HTTP command over the Internet protocol stack to the "home access server". This command is the HTTP GET command as described above.

As previously described, the "home access server" maintains a home page according to the architecture of the home network it is connected to. Therefore, once it receives the HTTP GET command, it can send back the GET response that contains the HTML script of the up-to-date home page (see end of step 1, figure 5).

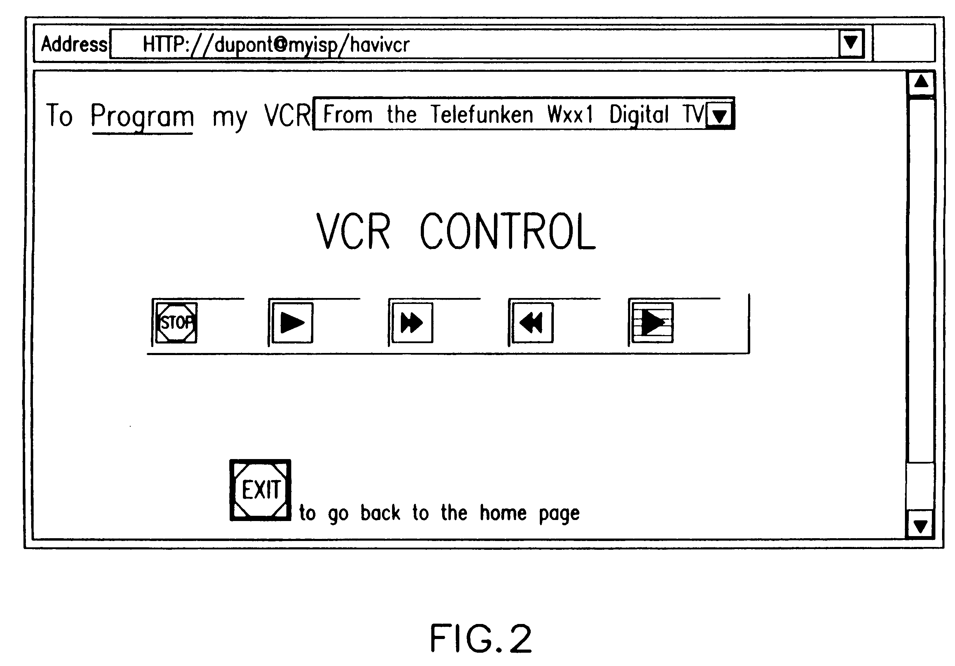

The user then selects the VCR icon (or bitmap). The attached URL ('havivcr') is sent to the "home access server" via a HTTP GET command. Before sending back the HTML script to allow VCR control, the "home access server" has to determine the status of the VCR (e.g. the VCR can be either in PLAY mode or in REC mode or another mode). The HAVi command "GetMediaTransport" is used to obtain this status. According to the result of this command, the "home access server" will send back the corresponding VCR control HTML script:
If the VCR is in PLAY mode, the HTML script to be sent should reflect this status. For example, the 'STOP icon' (see figure 2) may be displayed in a certain way to show that it may be activated.
For our scenario, we assume the VCR is in stand-by mode. Therefore, the returned HTML script corresponds to the Script 2, and the corresponding HTML page is that of Figure 2.

In this example, the VCR generic home page gives the access to five basic functions: Play, Fast Forward, Rewind, Stop and Record, as well as the programming tool used to select a television event to be recorded.

According to the present example, the first action decided by the user is to rewind the tape. He consequently selects the Rewind icon. The WEB browser then sends the HTTP GET command linked with the "vcrrw" reference as URL (as detailed in the HTML Script 2).

The "Home access server" then sends the VCR FAST REVERSE HAVi command to the target. Once the command is complete, the "Home access server" will send back, as HTTP response, the HTML page referenced by "vcrrw" (see Script 3). According to the status embedded in the HAVi response, the "Home access server" will first update the page with the result of the REWIND action ('success' or 'failure' for example).

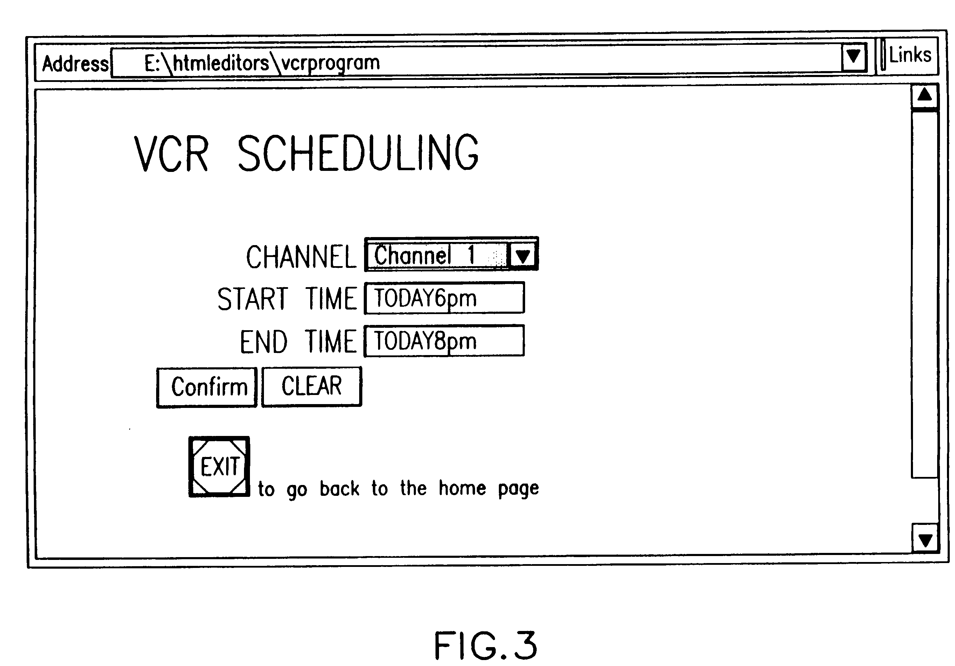

The next user action consists in programming the VCR to record a movie, today, at 6pm, the program source being the digital TV. The WEB browser sends the HTTP GET command linked with the "vcrprogram" reference as URL (as described in the HTML script 2). The "home access server" sends back the corresponding HTML script that allows a user to program the VCR. The relevant script is Script 4, while the corresponding display is that shown by figure 3.

The user enters the information as presented above and confirms by clicking on the 'Confirm' button. The information is sent to the "home access server" through the GET URL command as described in the chart of figure 5 (step 5). The "home access server" then calls the HAVi resource manager to schedule the action. As specified in the HAVi specification, the resource manager will check the availability of the target for the scheduled time, the required bandwidth, etc.

Once the HAVi scheduled action is acknowledged, the "home access server", according to the status embedded in the HAVi response, will send back to the client (WEB browser) the HTML page which contains the result of the VCR programming (see Script 5).

Advantages of the invention:
- Allows the control of the "non IP" in-home network devices from the Internet.
- Only the "home access device" is IP (Internet + HTTP + HTML) aware. The Internet protocols like HTTP, HTML are often updated. The consequence of this advantage is that is that the home network devices are not concerned by these changes. The "home access device and, thus, the "home access server" are only concerned by the Internet protocol updates. The devices themselves store neither the IP stack, nor HTML page components.
- This invention is valuable for all well-known Audio Video command languages such as: AV/C CTS, CAL and HAVi.
- Script 1: home page HTML script 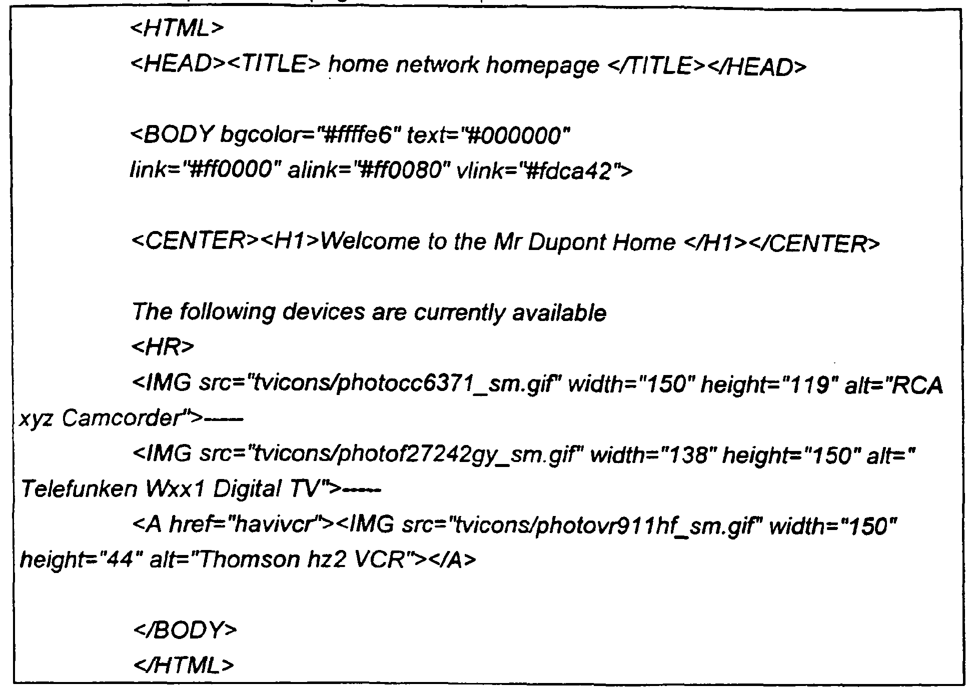
- Script 2: VCR home page : generic HTML script 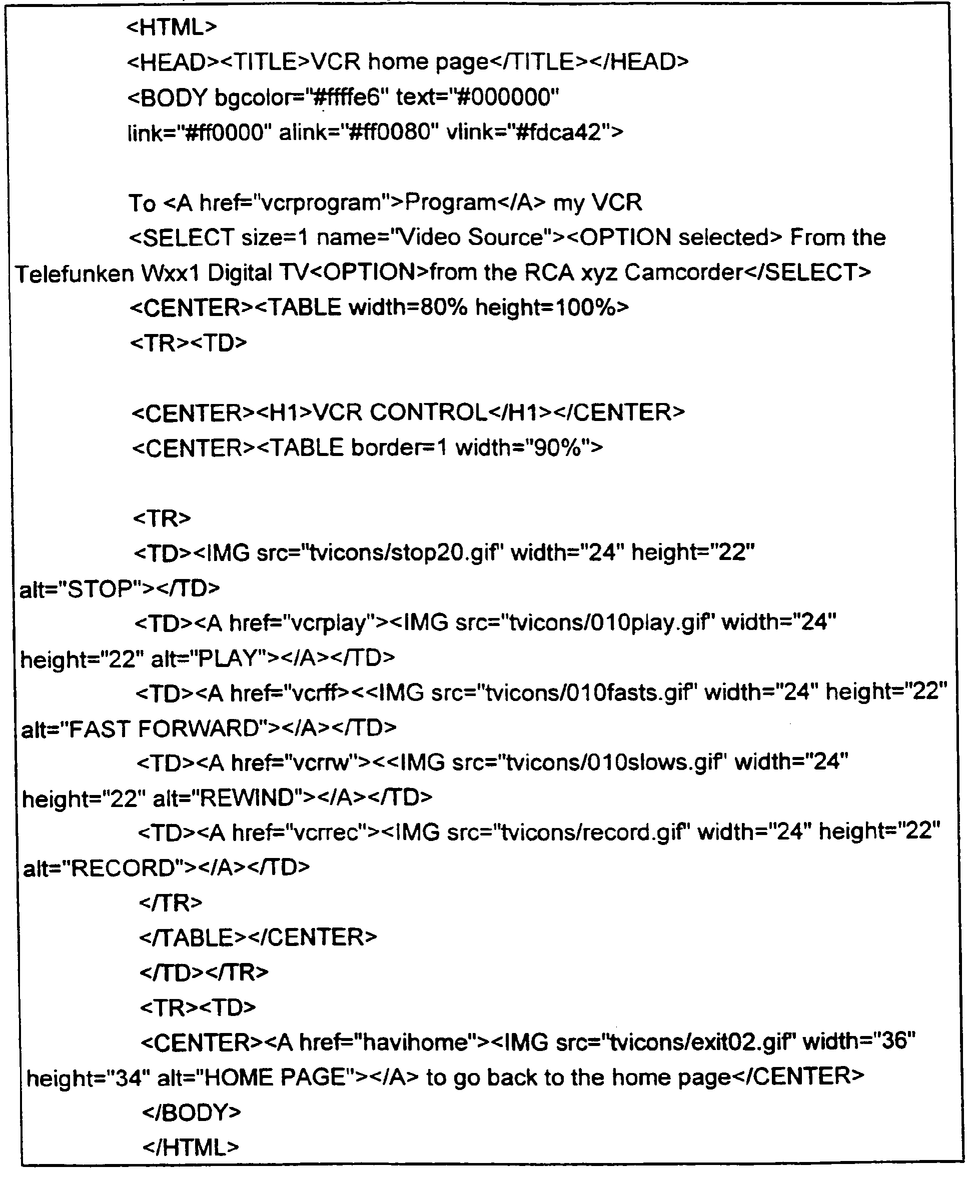
- Script 3: REWIND result HTML script 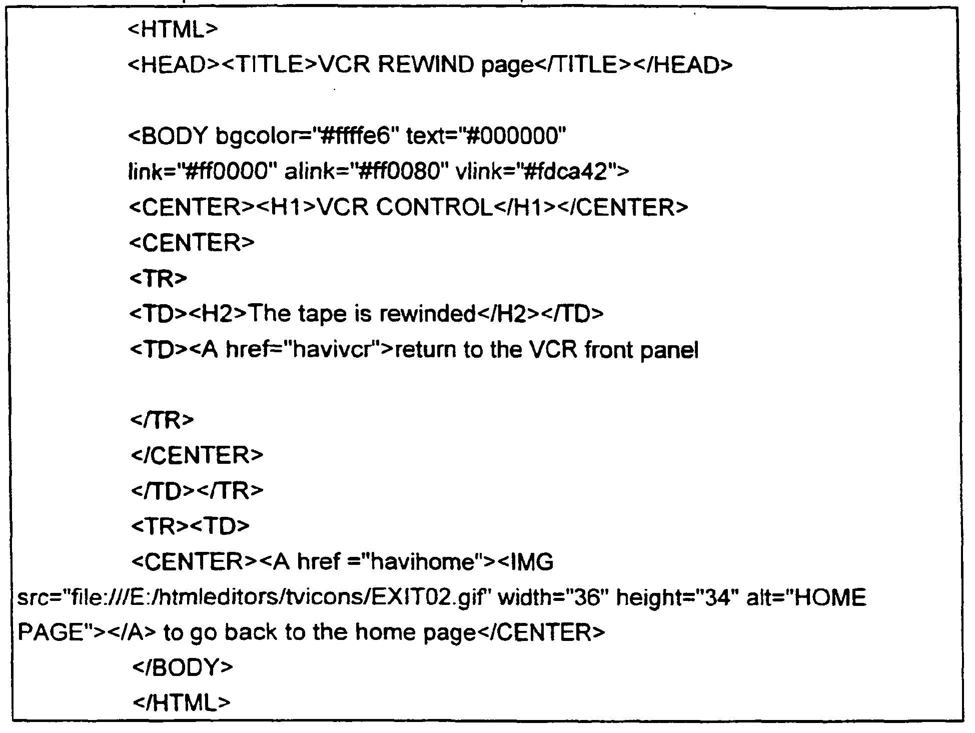
- Script 4: VCR programming form : HTML script 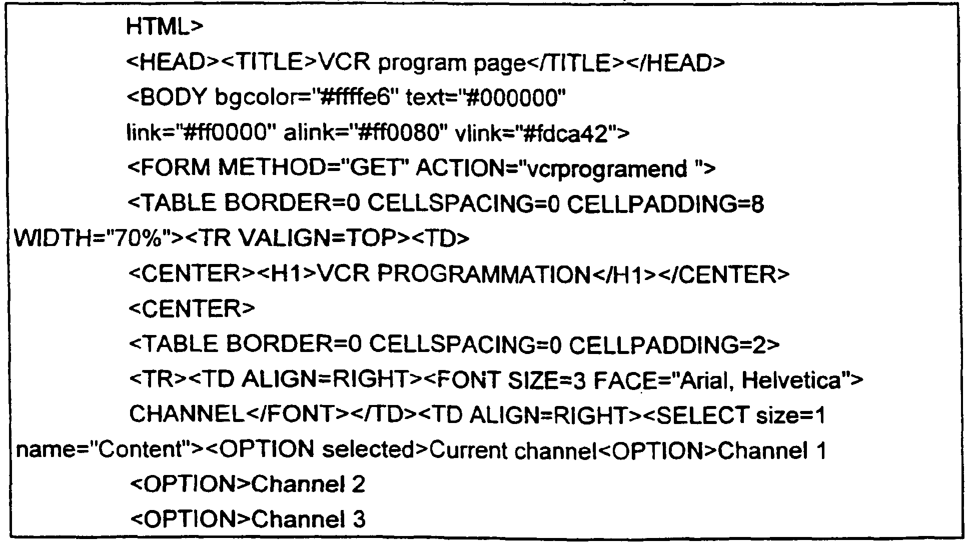 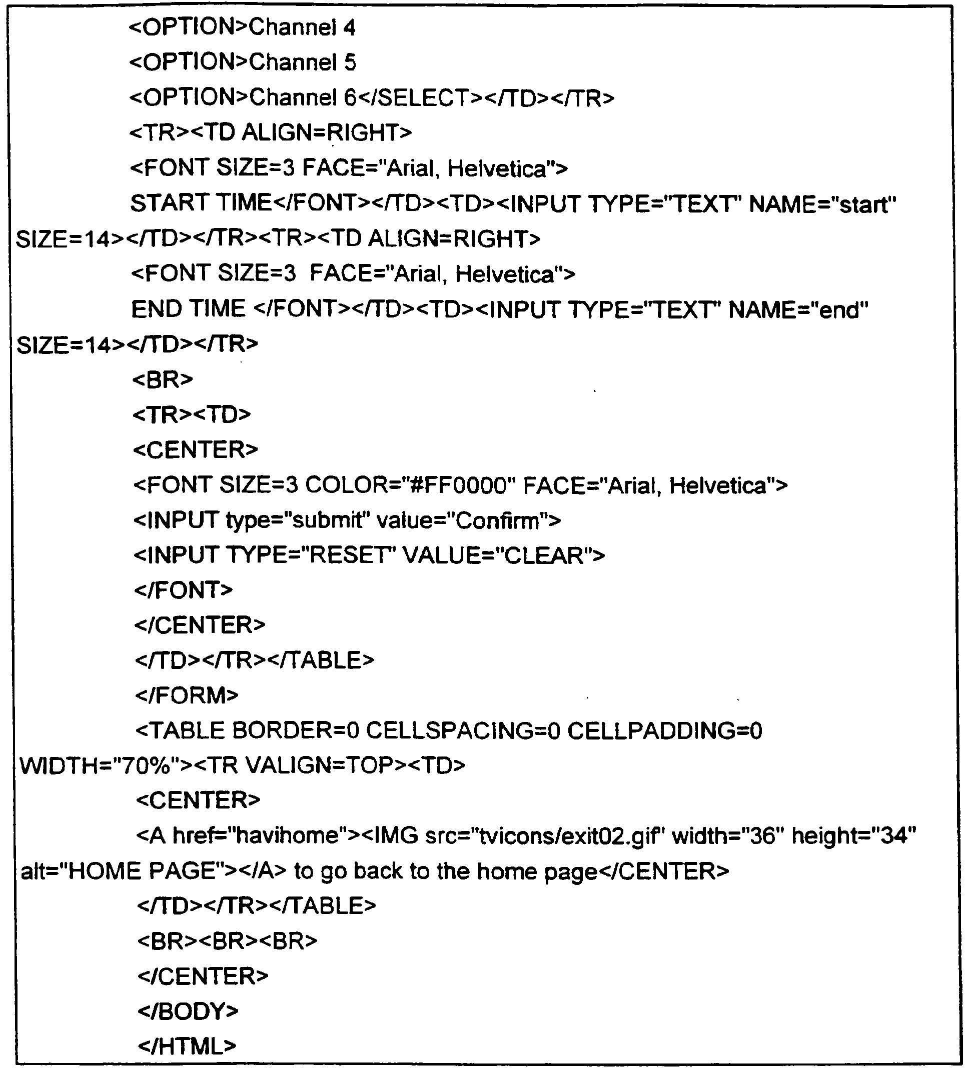
- Script 5: Figure 1 - VCR programmation: resulting HTML script

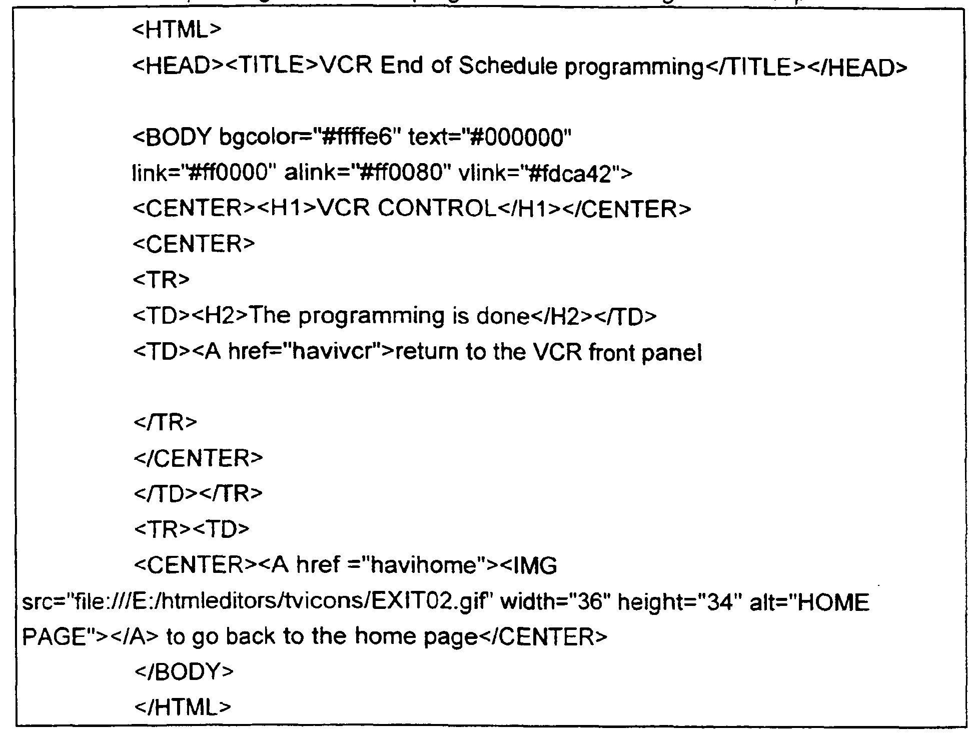

## Claims

1. Method for controlling devices in a home network by a control device (8, 9) connected to the home network by a home access device (7), **characterized in that** it comprises the steps of:
- providing, in the home access device (7), generic user control protocol page sets (6) for the functional component types defined by the home network specification;
- discovering, by the home access device, of functional components modules of devices connected to the home network;
- upon selection of a functional component module using the control device (8, 9), instantiating of generic user control protocol pages corresponding to said selected functional component module as a function of parameters of said selected functional component module.

2. Method according to claim 1, wherein said user control protocol is HTML or JavaScript or Java.

3. Method according to one of the claims 1 or 2, wherein the home access device communicates to the control device an instantiated user control protocol page comprising information identifying at least part of discovered functional components.

4. Home access device (7) for connecting a home network to a communication network comprising:
- a protocol stack for communication through the communication network with a control device (8, 9) for user interaction;
**characterized in that** it comprises
- a memory (6) for containing predefined generic user control pages for functional component modules;
- means for determining functional component modules present in the home network, for determining parameters of said functional component modules, for updating user control pages corresponding to a selected functional component module as a function of the parameters of said selected functional component module and for transmitting the updated pages to the control device.

## Patentansprüche

1. Verfahren zur Steuerung von Vorrichtungen in einem Heimnetzwerk durch eine Steuervorrichtung (8, 9), die mit dem Heimnetzwerk durch eine Heimzugangsvorrichtung (7) verbunden und **dadurch gekennzeichnet ist, dass** sie folgende Schritte umfasst:
- Bereitstellen entsprechender Protokollseitensätze (6) in der Heimzugangsvorrichtung (7) für die Benutzersteuerung für die funktionalen Komponentenarten, die durch die Spezifikation des Heimnetzwerkes definiert werden;
- Feststellen durch die Heimzugangsvorrichtung von funktionalen Komponentenbausteinen der Vorrichtungen, die mit dem Heimnetzwerk verbunden sind;
- nach Auswahl eines funktionalen Komponentenbausteins unter Verwendung der Steuervorrichtung (8,9), Realisieren von entsprechenden Protokollseiten der Benutzersteuerung, die dem ausgewählten funktionalen Komponentenbaustein als eine Funktion von Parametern des ausgewählten funktionalen KomponentenBausteins entsprechen.

2. Verfahren nach Anspruch 1, wobei das Steuerprotokoll des Benutzers HTML oder JavaScript oder Java ist.

3. Verfahren nach einem der Ansprüche 1 oder 2, wobei die Zugangsvorrichtung des Heimnetzwerkes der Steuervorrichtung eine realisierte Protokollseite der Benutzersteuerung übermittelt, die Information umfasst, die wenigstens einen Teil der festgestellten funktionalen Komponenten identifiziert.

4. Heimzugangsvorrichtung (7) zur Verbindung eines Heimnetzwerkes mit einem Kommunikationsnetzwerk, die umfasst:
- einen Protokollstapel für die Kommunikation zur Interaktion des Benutzers über das Kommunikationsnetzwerk mit einer Steuervorrichtung (8,9),
**dadurch gekennzeichnet, dass** er umfasst:
- einen Speicher (6) zur Aufbewahrung vorher definierter entsprechender Steuerseiten des Benutzers für funktionale Komponentenbausteine;
- Mittel zur Bestimmung funktionaler Komponentenbausteine, die in dem Heimnetzwerk vorhanden sind, um die Parameter der funktionalen Komponentenbausteine zu bestimmen, und um Steuerseiten des Benutzers entsprechend einem ausgewählten Komponentenbaustein als eine Funktion der Parameter des ausgewählten funktionalen Komponentenbausteins zu aktualisieren, und Mittel zur Weiterleitung der aktualisierten Seiten an die Steuervorrichtung.

## Revendications

1. Procédé pour le contrôle des dispositifs dans un réseau domestique par un dispositif de contrôle (8, 9) connecté au réseau domestique par un dispositif d'accès domestique (7), **caractérisé en ce qu'**il comprend les étapes de :
- fourniture, dans le dispositif d'accès domestique (7), d'ensembles de pages de protocole de contrôle utilisateur génériques (6) pour les types de composantes fonctionnelles définis par la spécification de réseau domestique ;
- découverte, par le dispositif d'accès domestique, de modules de composantes fonctionnelles de dispositifs connectés au réseau domestique ;
- suite à une sélection d'un module de composante fonctionnelle à l'aide du dispositif de contrôle (8, 9), instanciation de pages de protocole de contrôle utilisateur génériques correspondant audit module de composante fonctionnelle sélectionné comme une fonction de paramètres dudit module de composante fonctionnelle sélectionné.

2. Procédé selon la revendication 1, où ledit protocole de contrôle utilisateur est en HTML ou Javascript ou Java.

3. Procédé selon une des revendications 1 ou 2, où le dispositif d'accès domestique transmet au dispositif de contrôle une page de protocole de contrôle utilisateur instanciée comprenant des informations identifiant au moins une partie des composantes fonctionnelles découvertes.

4. Un dispositif d'accès domestique (7) pour la connexion d'un réseau domestique à un réseau de communication comprenant :
- une pile de protocoles pour une communication via le réseau de communication avec un dispositif de contrôle (8, 9) des interactions de l'utilisateur ;
**caractérisé en ce qu'**il comprend
- une mémoire (6) pour contenir des pages de contrôle utilisateur génériques prédéfinies pour des modules de composante fonctionnelle ;
- des moyens pour déterminer des modules de composante fonctionnelle présents dans le réseau domestique, pour déterminer des paramètres desdits modules de composante fonctionnelle, pour mettre à jour des pages de contrôle utilisateur correspondant à un module de composante fonctionnelle sélectionné comme une fonction des paramètres dudit module de composante fonctionnelle sélectionné et pour transmettre les pages mises à jour au dispositif de contrôle.
